# EUROPÄISCHE PATENTSCHRIFT

(11) **EP 1 144 095 B1**
(45) Veröffentlichungstag und Bekanntmachung des Hinweises auf die Patenterteilung: **02.07.2003**
(21) Anmeldenummer: 00906293.6
(22) Anmeldetag: 08.02.2000
(51) Int. Cl.: B01D 63/08

(54) **VORRICHTUNG ZUM KONZENTRIEREN UND/ODER REINIGEN VON MAKROMOLEKÜLEN IN EINER LÖSUNG UND VERFAHREN ZUM HERSTELLEN EINER DERARTIGEN VORRICHTUNG**
DEVICE FOR CONCENTRATING AND/OR PURIFYING MACROMOLECULES IN A SOLUTION AND METHOD FOR PRODUCING SUCH A DEVICE
DISPOSITIF DE CONCENTRATION ET/OU DE PURIFICATION DE MACROMOLECULES EN SOLUTION ET PROCEDE DE FABRICATION D'UN TEL DISPOSITIF

(30) Priorität: 15.02.1999 SE 9900530
(43) Veröffentlichungstag der Anmeldung: 17.10.2001
(73) Patentinhaber: Vivascience AG, 30625 Hannover (DE)
(72) Erfinder: VASSAROTTI, Vincenzo, CH-1180 Rolle (CH)
(74) Vertreter: Rucker, Ernst, Dr. Dipl.-Chem.
(86) Internationale Anmeldenummer: EP0000976
(87) Internationale Veröffentlichungsnummer: WO00048716

(56) Entgegenhaltungen:
- DE-C2- 3 725 445
- US-A- 4 944 876
- US-A- 5 647 990
- DATABASE WPI Section Ch, Week 199320 Derwent Publications Ltd., London, GB; Class J01, AN 1993-166079 XP002901083 & SU 1 738 314 A (CHEM REAGENTS ULTRAPURE CHEM SUBSTANCES), 7. Juni 1992 (1992-06-07)

## Beschreibung

Diese Erfindung betrifft eine Vorrichtung zum Konzentrieren und/oder Reinigen von Makromolekülen in einer Lösung und ein Verfahren zum Herstellen einer derartigen Vorrichtung. Die Vorrichtung umfaßt eine Kammer bzw. Abteilung für die zu verarbeitende Probe und eine Kammer für das Filtrat, das mittels mindestens einer Membran abgetrennt wird. Genauer ausgedrückt betrifft die Erfindung eine neue Art der Befestigung der Membran in druckbeständiger abdichtender Beziehung an der Grenzfläche zwischen den beiden Kammern. Vorrichtungen, die gemäß der Erfindung hergestellt werden, können in Zentrifugen, als Tangentialstrommodule, als Gasdruckzellen oder mit handbetätigten Spritzen etc. verwendet werden.

Viele Biotechnologielaboratorien und Institutionen des Gesundheitswesens verwenden Mikro- und Ultrafiltrationsverfahren zur Verarbeitung von biologischen Lösungen. Beispielsweise wird die Filtration als Sterilisierungsschritt zum Entfernen von Bakterien, als Klärungsschritt zum Entfernen von suspendierten Feststoffen und Verunreinigungen, als ein Konzentrationsschritt für Proteine und andere Makromoleküle oder als Reinigungsschritt zum Eliminieren von unerwünschten Mikromolekülen, wie z.B. Salzen, verwendet. Alternative Filtrationsverfahren, -vorrichtungen und Membranabsperrungen werden bei bestimmten Anwendungen und Prozeßerfordernissen entsprechend verwendet.

Zentrifugalkräfte, Gas- oder Flüssigkeitsdruck oder Vakuum werden typischerweise verwendet, um den Vektor bzw. Gradienten zu schaffen, um Lösemittel und kleine Mikromoleküle durch eine Membran zu drücken oder zu ziehen, während Lösungsbestandteile, die größer sind als die Ausschlußgrenze der Membran, zurückgehalten werden. Bei den meisten Anwendungen ist die Filtratiönsgeschwindigkeit in Bezug auf die verwendete Membranfläche um so größer, je höher der angelegte Druck bzw. das angelegte Vakuum sind. Allgemein sind Vorrichtungen mit kleiner Fläche und hoher Geschwindigkeit bevorzugt.

Typische Vorrichtungen der hier angesprochenen Bauart enthalten eine Kammer für die zu verarbeitende Probe und eine Kammer für das Filtrat. Diese Kammern stehen durch mindestens eine gemeinsame Öffnung in Verbindung, in welcher eine poröse Membran, wie z.B. eine Mikroporen-, Ultrafiltrations- oder Umkehrosmose-Membran angeordnet ist. Die Membran ist an ihrem Umfang an der Öffnung entweder an der Umfangsfläche der Konzentrations- oder der Filtratkammer oder an beiden abdichtend angebracht.

Die Membran ist gewöhnlich auf der Permeatseite gehaltert, um dem Druck zu widerstehen. Es ist ein Einlaß vorgesehen, um eine Flüssigkeitsprobe in die Konzentrationskammer einzuführen, und ein Auslaß für das Filtrat aus der Filtratkammer. In sogenannten Tangentialstromvorrichtungen ist in der Konzentrationskammer ein zusätzlicher Auslaß angeordnet, um die Zirkulation der Probe zu erlauben.

Es ist klar, daß die Abdichtung der Membran sehr hohen Ansprüchen genügen muß, so daß die zu verarbeitende Flüssigkeit daran gehindert wird, die Membran zu umgehen. Die Membran kann in einer Vielzahl von Arten abgedichtet werden, beispielsweise mittels Heißsiegeln, Verkleben mit Klebstoff oder Lösemittel, Ultraschallschweißen oder durch Preßsitz.

Material und Wandstärke der Kammer, die ebenfalls abdichtend miteinander verbunden werden, werden so gewählt, daß sie dem Betriebsdruck widerstehen.

Die Vorrichtungen sind manchmal zusätzlich mit separaten Druckhalteeinrichtungen versehen oder Membrananordnungen werden zwischen externen Druckplatten angeordnet, die typischerweise miteinander verschraubt werden, um eine zusätzliche Halterung zu schaffen.

Eines der Probleme bei Vorrichtungen nach dem Stand der Technik ist die Schwierigkeit, einen zufriedenstellenden Kompromiß zwischen der Zuverlässigkeit der Abdichtung für die Membran und/oder für die Verbindungsstelle zwischen den Kammern, eine entsprechende Druckhaltefähigkeit und niedrige Herstellungskosten zu erreichen.

Aus Gründen der praktischen Ausführung und aus Kostengründen ist es wünschenswert, Filtrationsvorrichtungen durch Formverfahren herzustellen, es ist jedoch nicht immer möglich, Membranauflagerabschnitte mit ausreichender Dicke zu formen, so daß sie hohen Betriebsdrücken widerstehen können, da es schwierig ist, beim Formvorgang dicke und dünne Bereiche zu mischen. Die Alternative, separate Druckhalteeinrichtungen oder externe Druckplatten zu verwenden, ist sowohl teuer als auch für kleine Vorrichtungen unpraktisch. Ferner sind in Abhängigkeit von den verwendeten Membran- und Bauteilmaterialien geeignete Dichtungssysteme häufig teuer und/oder unzuverlässig, wenn sie bei hohem Druck verwendet werden.

Ein weiteres Problem stellt es dar, eine ausreichend feste Abdichtung zwischen den Kammern zu erzielen, insbesondere bei nicht kompatiblen oder nicht abdichtenden Materialien und bei Vorrichtungen mit großer Fläche, die höheren Gesamtdrücken widerstehen müssen.

Die in der US-A-5,647,990 beschriebene Zentrifugalfiltrati-onsvorrichtung hat den Nachteil der Gefahr der Beschädigung der relativ zerbrechlichen Membran, wenn das Rückhaltegehäuse auf die Konzentrationskammer geschoben wird, da durch Reibungskräfte die Neigung besteht, auch die Membran aus ihrer erforderlichen Position zu schieben.

Die Druckhaltefähigkeit und die Unversehrtheit der Abdichtung ist ferner durch die Schwierigkeit der Formung einer ausreichend dicken Membranauflagerplatte und die unvollständige Abstützung, welche für die Dichtfläche der Membran aufgrund von Filtratauslaßkanälen vorgesehen ist, welche die Dichtfläche in dieser Vorrichtung nach dem Stand der Technik direkt durchqueren, beschränkt. Das Problem der Reibungskräfte und der unvollständigen Dichtungsabstützung wird weiter verstärkt, wenn die Membran nicht zuerst in der Konzentrationskammer abdichtend eingesetzt wird, sondern die Abdichtung und der Zusammenbau in einem einzigen Vorgang durch den während des Zusammenbaues vorliegenden Druck des Umfangs der Membran auf die Öffnung der Kammer bewirkt wird.

Das Dokument GB-A-9819686.8 zeigt eine sogenannte Tangentialstromvorrichtung. Die Wirtschaftlichkeit dieser Vorrichtung wird dadurch beschränkt, daß es erforderlich ist, die Teile der Vorrichtung aufgrund der Schwierigkeit beim Formen der Bauteile mit einer ausreichenden Dicke, um hohem Druck zu widerstehen, spanend zu bearbeiten. Zusätzlich sind Verschraubungseinrichtungen, die relativ kostenaufwendig sind, erforderlich, um die zusammengebaute Vorrichtung in druckbeständiger Weise zusammenzuhalten.

Es ist eine Aufgabe der vorliegenden Erfindung, eine Vorrichtung der vorstehend genannten Bauart zu schaffen, welche einfach herzustellen ist, während sie eine erhöhte allgemeine Zuverlässigkeit bietet.

Es ist eine weitere Aufgabe, ein Verfahren zu schaffen, gemäß welchem die Membran mit der Vorrichtung während des Zusammenbaues in einem einzigen Verfahrensschritt abdichtend verbunden wird.

Es ist eine weitere Aufgabe, eine Vorrichtung zu schaffen, bei der es möglich ist, für die Konzentrations- und Filtrat kammer Materialien zu wählen, die nicht Heiß- oder Ultraschallversiegelungskompatibel miteinander und/oder mit der verwendeten Membran sein müssen.

Es ist eine weitere Aufgabe, eine Vorrichtung zu schaffen, welche eine abgestützte Dichtung um den gesamten Umfang der Membran aufweist.

Es ist eine weitere Aufgabe der Erfindung, eine Vorrichtung zu schaffen, die beispielsweise nach Durchführung des Verarbeitungsvorganges geöffnet und wieder geschlossen werden känn, um die Membran zu überprüfen und/oder zu ersetzen, ohne die Konzentrations- und Filterkammer oder die Membran zu beschädigen. Dieses Merkmal bietet selbstverständlich ein hohes Maß an Flexibilität.

Die Probleme im Stand der Technik werden durch das Schaffen der Vorrichtung und des Verfahrens zum Herstellen der Vorrichtung gemäß den Definitionen in den beigefügten Ansprüchen gelöst.

Weitere Aufgaben, Verwendungen und Vorteile dieser Erfindung werden aus dem Studium dieser Beschreibung deutlich, die unter Bezugnahme auf die beiliegenden Zeichnungen gegliedert ist, welche einen Teil derselben bilden.

Es ist eine Aufgabe der vorliegenden Erfindung, eine Vorrichtung zur gleichzeitigen Filtration einer Vielzahl von Flüssigkeitsproben zu schaffen, welche einfach herzustellen ist, während sie eine erhöhte Zuverlässigkeit bietet.

Figur 1 zeigt eine perspektivische Ansicht einer Vorrichtung gemäß vorliegender Erfindung, die als ein Tangentialstrommodul ausgeführt ist.

Figur 2 zeigt eine Schnittansicht des Einsatzes gemäß Figur 1.

Figur 3 zeigt eine Seitenansicht der Ausführungsform gemäß Figur 1.

Figur 4 zeigt eine Draufsicht der Ausführungsform gemäß Figur 1 im zusammengebauten Zustand.

Figur 5 zeigt eine Schnittansicht der zusammengebauten Vorrichtung gemäß Figur 4.

Figur 6 zeigt eine Draufsicht des oberen transparenten Teiles des Einsatzes gemäß Figur 1.

Figur 7 zeigt eine Draufsicht des unteren transparenten Teiles des Einsatzes gemäß Figur 1.

Figur 8 zeigt eine Draufsicht des oberen transparenten Teiles einer weiteren Ausführungsform des Einsatzes gemäß Figur 1.

Figur 9 zeigt eine perspektivische Ansicht einer weiteren Ausführungsform der Vorrichtung gemäß der Erfindung, die als eine Zentrifugalfiltrationsvorrichtung ausgeführt ist.

Figur 10 zeigt den Zusammenbau der Vorrichtung gemäß Figur 9.

Figur 11 zeigt eine zusammengebaute Vorrichtung gemäß Figur 9.

Figur 12a zeigt eine Schnittansicht einer zusammengebauten Vorrichtung gemäß Figur 9.

Figur 12b zeigt eine Schnittansicht einer zusammengebauten Vorrichtung gemäß Figur 9, die mit einer Variante der Gehäusebuchse bzw. -muffe bzw. -hülse versehen ist.

Figuren 13a und b zeigen zwei Horizontalschnittansichten durch die zusammengebaute Vorrichtung gemäß Figur 12a.

Figur 14 zeigt schematisch eine perspektivische Ansicht mit einerauseinandergezogenen Darstellung des mittleren Teils einer Ausführungsform der erfindungsgemäßen Vorrichtung.

Figur 15 zeigt eine Schnittansicht einer zusammengebauten Vorrichtung.

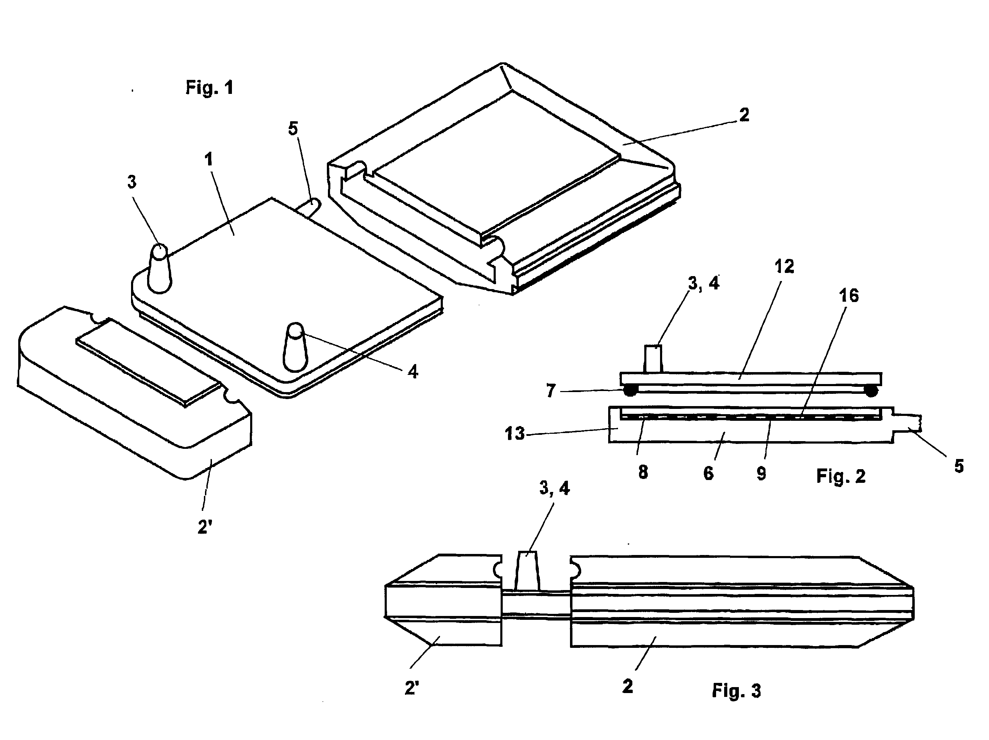

Figur 1 zeigt eine perspektivische Ansicht einer Vorrichtung gemäß vorliegender Erfindung, die als ein(e) Tangentialstromfiltrationsmodul bzw. -zelle ausgeführt ist, welche beispielsweise zum Konzentrieren oder Fraktionieren von Makromolekülen in einer Lösung verwendet werden kann. In einem Filtrationssystem wird ein Filtrationsmodul dieser Bauart mit einer Pumpe verbunden, die typischerweise Flüssigkeit aus einem Probenreservoir durch das Modul bzw. die Zelle abzieht und die Probenflüssigkeit durch eine Schleife, welche die Zelle einschließt, rezirkuliert. Das Modul ist in diese Schleife mittels eines Einlasses 3 und eines Auslasses 4 für die Probenflüssigkeit eingebunden. Dieser Einlaß und dieser Auslaß sind gemäß der Erfindung an einem Einsatz 1 angeordnet. Der erforderliche Systemdruck wird durch einen Drosselkörper bzw. Flußreduzierer gebildet, der an dem Auslaß 4 der Zelle positioniert ist.

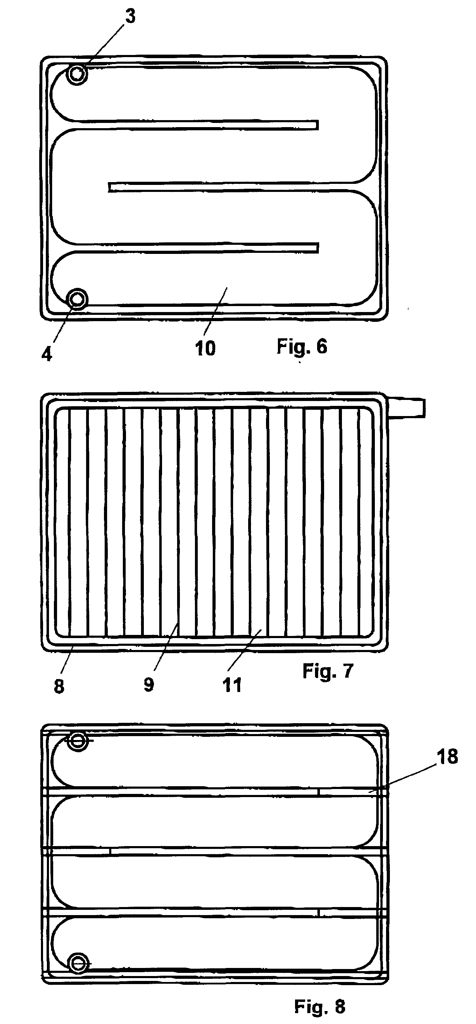

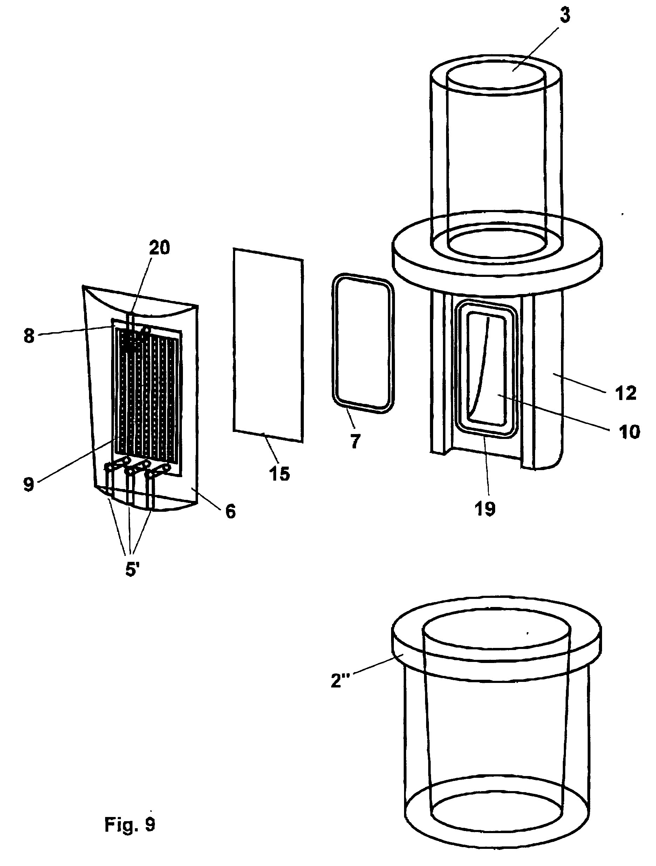

Der Einsatz 1 umfaßt eine(n) Konzentrationskammer bzw. -raum und eine(n) Filtratkammer bzw. -raum, die durch eine Membran getrennt sind. Figur 6 zeigt ein Beispiel einer Konzentrationskammer 10 in Form eines dünnen Kanals für die Probenflüssigkeit, der in dem oberen Teil 12 des Einsatzes angeordnet ist, vgl. Figur 2, welcher einen Einlaß 3 und einen Auslaß 4 hat, die an seinen Endabschnitten angeordnet sind. Diese Kammer ist von der mit ihr zusammenwirkenden Filtratkammer 11, die in dem unteren Teil 6 des Einsatzes 1 angeordnet ist, mittels einer Membran getrennt. Ein Beispiel einer derartigen Filtratkammer ist in Figur 7 gezeigt.

Bedingt durch die Druckdifferenz zwischen der Zuflußseite und der Filtratseite der Membran dringt Filtrat durch die Membran in die Filtratkammer und wird durch den Auslaß 5 abgezogen bzw. abgeführt und außerhalb der Zelle gesammelt.

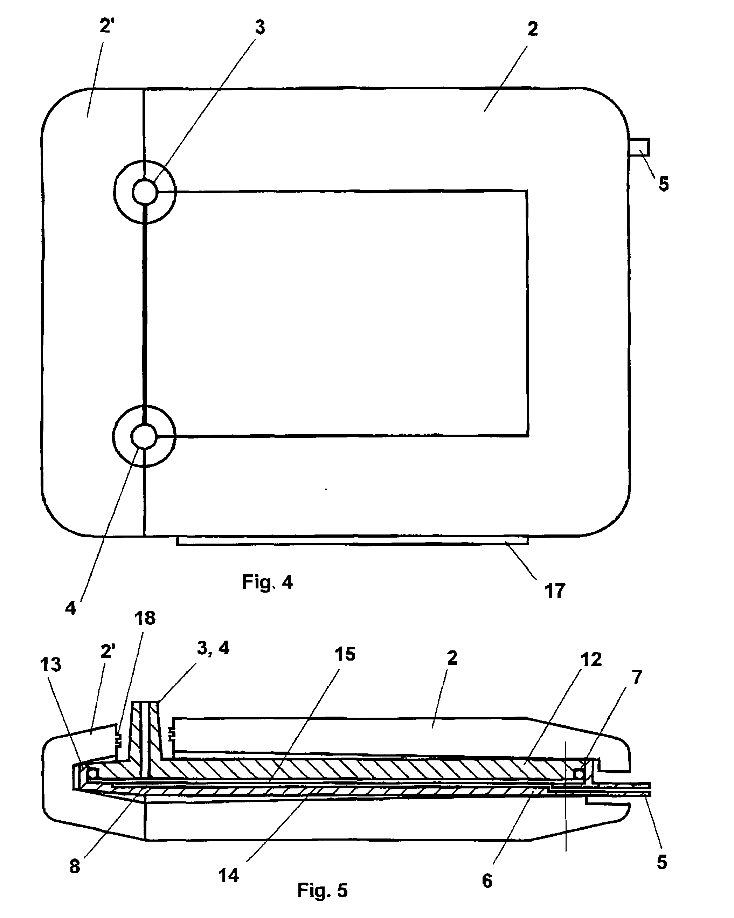

Figur 2 zeigt einen Querschnitt durch ein Beispiel eines Einsatzes gemäß Figur 1. Der untere Teil 6 hat eine allgemein flache obere Oberfläche bzw. Fläche 16, die als Membranauflager bzw. -stütze verwendet wird. Diese Oberfläche ist mit einer Vielzahl von parallelen Nuten versehen, die Kanäle 9 für das Filtrat bilden, vgl. auch Figur 7. Diese Kanäle stehen alle beispielsweise mittels eines Sammelkanals 8 und eines quer verlaufenden Auslaßkanals 14, vgl. Figur 5, miteinander in Verbindung, welcher die Endabschnitte der Kanäle 9 auf einer Seite des Einsatzes verbindet, um das gesamte gesammelte Filtrat einem Filtratauslaß 5 aus der Zelle zuzuführen.

Die Membran 15, vgl. Figur 5, ist auf der Oberseite der Oberfläche 16 angeordnet und reicht entlang dem Rand dieser Oberfläche bis zu den vertikalen Wandabschnitten 13. Entlang der Innenseite der vertikalen Wandabschnitte auf der Oberfläche 16 ist in dieser Ausführungsform ein allgemein flacher Dichtungssitz, vgl. Figur 2, 5, 7, angeordnet. Dies bedeutet, daß die Membran über ihren gesamten Umfang eine allgemein flache Auflagefläche bzw. -stütze hat. Eine Dichtung 7 in Form eines O-Ringes ist in dieser Ausführungsform auf der Oberseite der Membran über dem Dichtungssitz und dem oberen Teil 12, welcher den Einsatz verschließt, angeordnet.

Ein Gehäuse bzw. eine Hülse 2, 2', vorzugsweise hergestellt durch Formung eines geeigneten Kunststoffmaterials, umgibt den Einsatz. In der in Figur 1, 3, 4, 5 dargestellten Ausführungsform ist das Gehäuse in zwei Teilen 2 und 2' ausgeführt, welche beim Zusammenbau von zwei entgegengesetzten Seiten über den Einsatz geschoben werden, um das/die komplette Gehäuse bzw. Hülse zu bilden. Beim Zusammenbau drückt dieses/diese Gehäuse bzw. Hülse den Einsatz 1 ohne Reibungskräfte auf die Membran, wobei gleichzeitig in einem Schritt die Konzentrationskammer und die Filtratkammer durch Abdichten des/der Membranrandes bzw. -kante gebildet werden.

Somit ist es durch einfaches Zusammensetzen einer bestimmten Anzahl von separaten Bauteilen ohne Verwendung eines Werkzeuges oder von Klebstoffen möglich, ein Filtrationsmodul zu verwirklichen, für das bisher Klebstoff, verschraubte Druckplatten, Montagewerkzeuge, etc. erforderlich waren.

Zusätzlich kann dieses Modul ohne weiteres zur Überprüfung, zum Membranwechsel, zur Reinigung oder zu jedem anderen Zweck zerlegt werden, ohne eines der Bauteile zu beschädigen.

Figur 3 zeigt eine Seitenansicht der Ausführungsform gemäß Figur 1. Das Einführen des Einsatzes in die beiden Muffen- bzw. Gehäuseteile ist anfangs aufgrund der Keilform bzw. zulaufenden Form des Gehäuses und des Einsatzes, vgl. Figur 5, sehr leicht. Eine größere Kraft ist nur gegen Ende des Zusammenbaues während des Zusammendrückens der Dichtung erforderlich. Es wäre ebenfalls möglich, eine Schrumpftechnik zu verwenden, um das Gehäuse bzw. die Muffe in Position zu bringen.

Figur 4 zeigt eine Draufsicht der Ausführungsform gemäß Figur 1 in zusammengebautem Zustand. An dem unteren Teil des Gehäuses ist bei dieser Ausführungsform ein(e) Schwalbenschwanzkante bzw. -flansch 17 angeordnet, welcher mit einem/einer entsprechenden Schlitz bzw. Nut am oberen Teil eines benachbarten Moduls (nicht dargestellt) zusammenwirken könnte. Auf diese Weise könnten Filtrationszellen nach Erfordernis übereinander gestapelt werden.

Figur 5 zeigt einen Querschnitt der zusammengebauten Vorrichtung gemäß Figur 4. Wie zu erkennen ist, wurde das Innere des geformten Gehäuses keilförmig bzw. zulaufend ausgeführt. Dies ist selbstverständlich für Fertigungszwecke praktisch, schafft aber auch eine Möglichkeit, die erforderlichen Kompressionskräfte für den Einsatz 1 zu erzielen, wenn dieser ebenfalls eine Keilform aufweist. Um praktisch denselben Kompressionseffekt, jedoch eine niedrigere Reibung zwischen dem Gehäuse und dem Einsatz beim Zusammenbau zu erreichen, könnten die obere und die untere Oberfläche des Einsatzes parallel ausgeführt werden und die Keilform könnte mittels in Längsrichtung verlaufenden keilförmigen Kanten bzw. Flansche auf der oberen und unteren Oberfläche bzw. Fläche oder mindestens einer der beiden verwirklicht werden. Eine derartige Lösung wurde in Figur 8 dargestellt, welche die keilförmigen Kanten bzw. Flansche 18 zeigt.

Ein zusätzlicher Vorteil des geformten Gehäuses in zwei Teilen 2, 2' gemäß vorstehenden Ausführungsformen liegt darin, daß ein Standardgewinde für den Einlaß 3 und den Auslaß 4 für die Flüssigkeitsprobe ohne weiteres während des Formvorganges hergestellt werden könnte.

Es sind viele Varianten der erfinderischen Idee vorhanden. Beispielsweise könnte es vorteilhaft sein, in bestimmten Ausführungsformen die Dichtung zwischen der Membran und der Filtratkammer anzuordnen.

Es ist klar, daß eine große Flexibilität hinsichtlich der Wahl des Materials für die verschiedenen Bauteile des Filtrationsmoduls erreicht wurde. Eine Verbund- bzw. Verklebungskompatibilität ist zwischen keinem der Bauteile dieser Ausführungsform erforderlich. Dies bedeutet, daß beispielsweise ein relativ weiches und flexibles Material für den Einsatz oder einen Teil des Einsatzes verwendet werden könnte, während für das Gehäuse ein relativ starres bzw. steifes und festes Material verwendet werden könnte. Auf diese Weise könnte die Dichtung auch in den oberen und/oder unteren Teil 6, 12 des Einsatzes integriert werden. Die Dichtung könnte auf diese Weise die Form eines Randes oder einer Kante bzw. Rille am Umfang des oberen und/oder unteren Teiles aus demselben Material wie der Rest des Teiles 6, 12 haben.

Die chemischen Eigenschaften der unterschiedlichen Bauteile könnten auch mit größerer Flexibilität gewählt werden. Ein Material mit einer höheren Lösemittelbeständigkeit könnte beispielsweise für den inneren Aufbau gewählt werden, der in Kontakt mit dem Flüssigkeitsstromweg ist.

Die beiden Gehäuseteile 2, 2' wurden mit geschlossenen Endabschnitten dargestellt. Diese Konstruktion ergibt ein sehr festes und starres Gehäuse, das hohen Drücken widerstehen kann. Es versteht sich jedoch, daß diese Endabschnitte nicht bei allen Anwendungen unbedingt erforderlich sind.

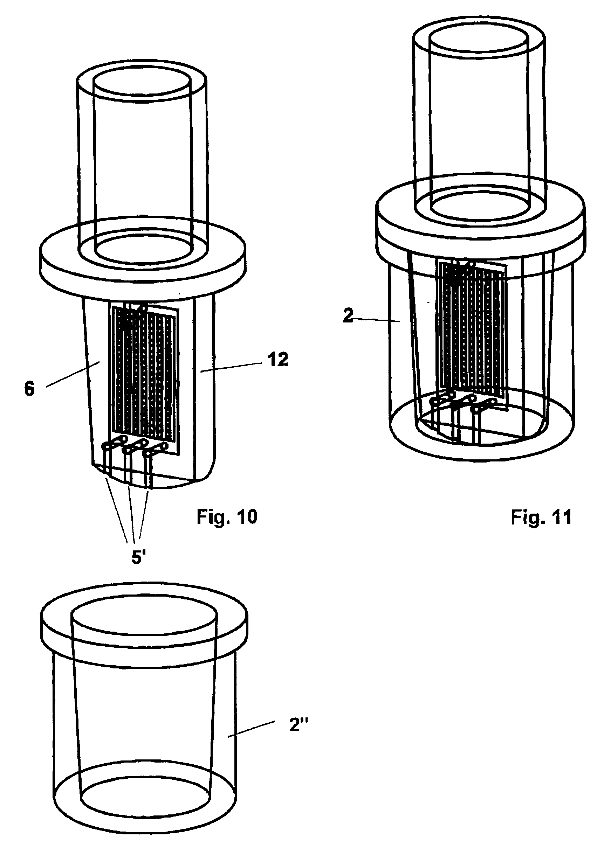

Figur 9 zeigt eine perspektivische Ansicht einer weiteren Ausführungsform der Vorrichtung gemäß der Erfindung, die als Zentrifugalfiltrationsvorrichtung ausgeführt ist. Bauteile, die den in Verbindung mit den Ausführungsformen gemäß Figur 1 bis 8 beschriebenen Bauteilen entsprechen, wurden mit denselben Bezugszeichen bezeichnet. Somit ist eine Konzentrationskammer 10 vorgesehen, um die zu verarbeitende Probe aufzunehmen. In diesem Fall wird die Probe nicht in diese Kammer rezirkuliert und daher ist kein Auslaß für die Probe aus dieser Kammer vorgesehen, sondern nur ein Einlaß 3. Eine Dichtung 7 ist so vorgesehen, daß sie in einer Nut 19 bzw. einem Rücksprung um eine Öffnung in der Wand der Kammer angeordnet wird. Ein geeignetes Membranstück 15 wird über der Öffnung angeordnet. In derselben Weise wie vorstehend beschrieben wird eine Filtratkammer, das mit einem/einer Membranauflager bzw. -stütze und einer Vielzahl von vertikalen parallelen Nuten versehen ist, welche die Kanäle 9 für das Filtrat bilden, mittels des Bauteiles 6 geschaffen, wenn es gegen die Membran 15 befestigt wird.

Figur 10 zeigt die zusammengebauten Bauteile 12, 7, 15 und 6 der Vorrichtung gemäß Figur 9. Ein einteiliges Gehäuse 2" wird in dieser Ausführungsform über die zusammengebauten Bauteile geschoben. Aufgrund der Keil- oder Konusform des Bauteils 6, das heißt der Filtratkammer, und der entsprechenden inneren Form des Gehäuses wird die Filtratkammer gegen die Membran 15 gedrückt und preßt die Dichtungseinrichtung gegen die Konzentrationskammer. Es sei angemerkt, daß die Membran nur Kräften senkrecht zu ihrer Oberfläche bzw. Fläche ausgesetzt ist, wenn das Gehäuse in Position gebracht wird.

Auf diese Weise wird ein Druck geschaffen und während des Zentrifugiervorganges aufrechterhalten, der ausreichend hoch ist, die Membran flüssigkeitsdicht gegen die Konzentrationskammer abzudichten.

Figur 11 zeigt die zusammengebaute Vorrichtung mit dem Gehäuse in seiner Position.

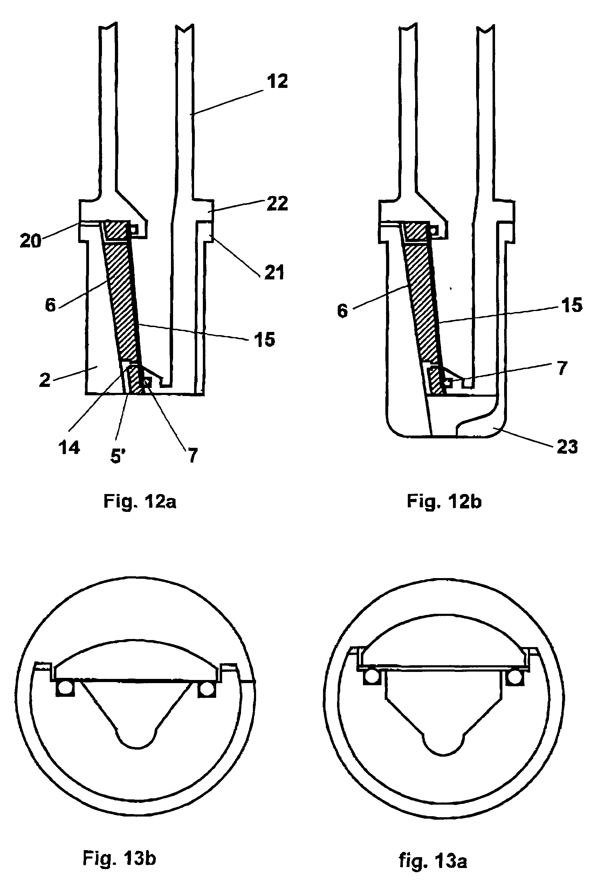

Figur 12a zeigt einen Querschnitt einer zusammengebauten Vorrichtung gemäß Figur 9. An dem oberen Teil der Filtrationskammer steht ein Be-/Entlüftungskanal 20 in Verbindung mit der Außenseite. Dieser Kanal kann Luft aus den Filtratkanälen 9 bei Beginn des Filtrationsprozesses evakuieren. In dieser Ausführungsform sind drei Kanäle 5' für den Auslaß des Filtrats vorgesehen, das in einem nicht dargestellten Filtratrohr gesammelt wird, in welches die Vorrichtung während des Prozesses teilweise eingesetzt wird. Die Kanäle 5' sind wie bei der in Figur 5 gezeigten Ausführungsform an der Innenseite mit einem quer verlaufenden Auslaßkanal 14 in Verbindung, welcher die Endabschnitte der Kanäle 9 an einer Seite der Filtratkammer verbindet, um das gesamte gesammelte Filtrat den Auslaßkanälen 5' zuzuführen.

Die Vorrichtung liegt mit einem Flansch 21 an dem Gehäuse 2 am Rand bzw. an der Kante des Filtratrohres auf, was bedeutet, daß die auf die Vorrichtung während des Prozesses wirkenden Zentrifugalkräfte das Gehäuse fest in seiner Position mit dem Flansch 21 an dem Flansch 22 des oberen Teils 12 halten.

Figur 12b zeigt einen Querschnitt einer zusammengebauten Vorrichtung gemäß Figur 9, die mit einer Variante des Gehäuses versehen ist. Um die Abdichtung zwischen der Dichtungseinrichtung 7 und der Membran an dem unteren Teil der.Vorrichtung sicherzustellen, wurde das Gehäuse bzw. die Muffe in diesem Bereich weniger flexibel gemacht, indem ein Stabilisierungsring 23 aus Material um die Öffnung in seinem unteren Teil hinzugefügt wurde. Der Ring 23 kann alternativ eine flachere Konfiguration als die im Querschnitt in Figur 12b gezeigte haben.

Da die vertikalen Filtratkanäle 9 in dieser und anderen Ausführungsformen nicht unter den quer verlaufenden Auslaßkanal 14 reichen, ist es möglich, ein allgemein flaches Auflager bzw. flache Stütze für die Permeatseite der Membran 15 entlang ihrem Umfang zu schaffen, was eine gleichmäßige Abdichtwirkung über den gesamten Umfang sicherstellt.

Figur 13a zeigt einen horizontalen Querschnitt durch die zusammengebaute Vorrichtung gemäß Figur 12a in dem oberen Teil und Figur 13b in dem unteren Teil. Die Keilform bzw. zulaufende Form des Bauteiles 6, welcher die Filtratkammer bildet, ist deutlich dargestellt.

Es ist klar, daß viele Varianten der grundsätzlichen erfindungsgemäßen Idee vorstellbar sind. So könnten zunächst erfindungsgemäße Vorrichtungen speziell zur Verwendung in einer Zentrifuge konstruiert sein, wie die unter Bezug auf die Figuren 9 bis 13 beschriebene Ausführungsform.

Es könnten jedoch auch Gas- oder Flüssigkeitsdruck oder Vakuum verwendet werden, um den Vektor bzw. Gradienten zu schaffen, um das Lösemittel und kleine Mikromoleküle durch die Membran zu drücken oder zu ziehen. Die erste Ausführungsform gemäß den vorstehenden Ausführungen verwendet beispielsweise Flüssigkeitsdruck.

Die Dichtungseinrichtung könnte die Form eines O-Ringes haben, der vorzugsweise in einer geeigneten Nut um eine der beiden Öffnungen positioniert wird. Auch sind zwei O-Ringe vorstellbar, wobei um jede Öffnung einer vorhanden ist. Wie bereits unter Bezugnahme auf die vorstehend beschriebene erste Ausführungsform erwähnt, könnte die Abdichtung der Membran mittels einer Dichtungseinrichtung erzielt werden, die in eine oder beide Kammern integriert ist. Diese Ausführungsform ist vorteilhaft, wenn für die Kammern bzw. Räume bzw. Teile davon ein weicheres Material verwendet wurde. Allgemein ist die Flexibilität hinsichtlich der Wahl des Materials für die verschiedenen Bauteile (mechanische Eigenschaften, chemische Eigenschaften, etc.), die unter Bezug auf die erste Ausführungsform vorstehend erörtert wurde, für alle Ausführungsformen vorhanden.

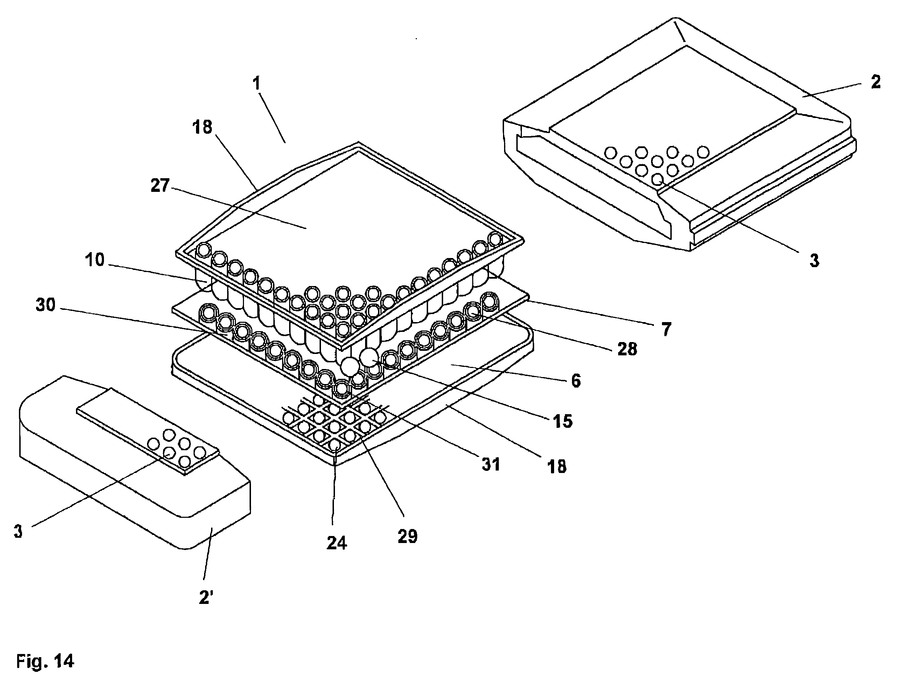

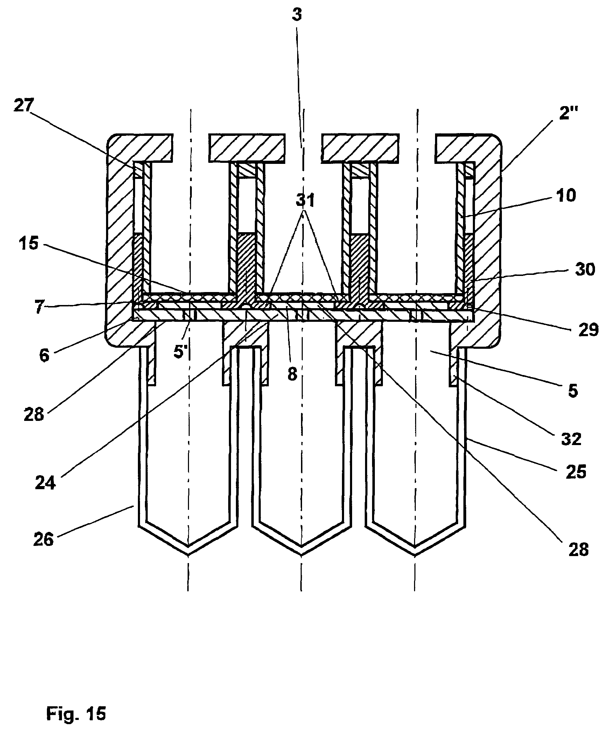

Die erfindungsgemäße Vorrichtung zur gleichzeitigen Filtration einer Vielzahl von Flüssigkeitsproben (Figuren 14 und 5) ist aus einem Einsatz 1 und aus einem um diesen Einsatz 1 angeordneten zweiteiligen Gehäuse 2, 2' zusammengesetzt. Der Einsatz besteht aus einem als Stützplatte ausgebildeten Bauteil 6, einer Dichtung in Form einer Dichtungsmatte 7, flächigen Filtermitteln/Membranen 15 und einer Platte 27 mit einer Vielzahl von Konzentrationskammern 10. Das Bauteil 6 verfügt über eine Vielzahl von Öffnungen 24, die vorzugsweise in ihrer Anzahl und Anordnung der Anzahl und Anordnung der Vertiefungen 25 einer Mikrotiterplatte 26 entsprechen. Die Öffnungen 24 des Bauteils 6 können zusätzlich mit einer Filterunterstützung ausgestattet sein, welche mittels Sammelkanal 8 und Kanälen für den Auslaß für Filtrat 5' ausgestattet sind. Eine vorzugsweise elastische Dichtungsmatte 7 ist auf dem Beuteil 6 aufgelegt und hat zu den Öffnungen 24 hin fluchtende Durchlässe 28, welche der Anzahl der Öffnungen 24 des als Stützplatte ausgebildeten Baueils 6 entsprechen. Vorzugsweise sind zur leichteren Positionierung der Dichtung 7 auf dem Bauteil 6 und zur sichereren Abdichtung der Filtermittel/Membran 15 gegenüber den Piltratkammern 11 um die Öffnungen 24 des Beuteils 6 herum beabstandet Wulste oder Stege 29 angebracht. Auf jener Seite der Dichtung/Dichtungsmatte 7, die dem als Stützplatte ausgebildeten Bauteil 6 abgewandt ist, sind die Durchlässe 28 von Manschetten 30 umfaßt. Die Manschetten 30 haben eine größere innere Weite als die Weite der Durchlässe 28 derart, daß an der Basis im Inneren der Manschetten 30 eine umlaufende Auflagefläche 31 aus dem Dichtungsmaterial ausgebildet ist. Auf die umlaufenden Auflageflächen 31 der Manschetten 30 werden bei der Montage die flächigen Filtermittel/Membranen 15 aufgelegt. In die Manschetten 30 werden bei der Montage der Vorrichtung die Kammern 10, zum Beispiel in Form von Röhrchen, eingeschoben, die an beiden Enden offen sind und die zu der Platte 27 verbunden sind. Die Kammern 10 haben Außenumfangsflächen, die zu den Innenumfangsflächen der Manschetten 30 kongruent sind. Die Kammern 10 dienen zum Einen der Aufnahme der Flüssigkeitsproben und zum Anderen im Zusammenwirken mit der Dichtungseinrichtung 4 der flüssigkeitsdichten Randabdichtung der flächigen Filtermittel/Membranen 15 zwischen der umlaufenden Auflagefläche 31 im Innern der Manschetten 30 und dem unteren offenen Ende der Kammern 10, in dem die Kammern 10 soweit in die Manschetten 30 eingeschoben werden, daß ihre unteren Enden an dem Randbereich der Filtermittel/Membranen 15 pressend anliegen. Das zweiteilige Gehäuse 2, 2' ist auf der Oberseite mit Einlässen für die Flüssigkeitsproben 3 und auf der Unterseite mit Auslässen 5 für Filtrat versehen, welche zu den Öffnungen 24 des Bauteils 6 kongruent sind. Bei der Montage der Vorrichtung werden die beiden Gehäuseteile 2, 2' über den zusammengesteckten Einsatz 1 geschoben derart, daß das Gehäuse 2'' geschlossen ist. Dabei werden solche Kompressionskräfte geschaffen und aufrechterhalten, die ausreichend hoch sind, um die Filtermittel/Membranen 15 flüssigkeitsdicht gegen die Auflagenflächen 31 der Manschetten 30 abzudichten. Dazu besitzt der Einsatz 1 ein konisches äußeres Profil und das Gehäuse 2'' ein konisches inneres Profil, welche beim Zusammenbau in Zusammenwirkung die Kompressionskräfte schaffen. Wie in der Figur 14 gezeigt wird, sind das als Stützplatte ausgebildete Bauteil 6 und die Platte 27 mit seitlichen keilförmigen Flanschen 18 ausgestattet. Im geschlossenen Gehäusezustand fluchten die Einlässe 3 der Oberseite des Gehäuses 2'', die Enden der Kammern 10, die Durchlässe 10 der Dichtungsmatte 28, die Öffnungen 24 der Stützplatte 6 und die Auslässe 5 der Unterseite des Gehäuses 2'' und liegen auf einer Geraden. Wie aus der Figur 15 hervorgeht, sind die Auslässe 5 an der Unterseite des Gehäuses 2'' mit Filtratauslaufstutzen 32 ausgerüstet, über die die Vorrichtung als Filteraufsatz auf eine Mikrotiterplatte 26 aufgesetzt ist.

Ein Verfahren zur Herstellung der Vorrichtung gemäß der Erfindung umfaßt die folgenden Schritte: eine Dichtungseinrichtung wird zunächst um mindestens eine der Öffnungen an der/dem Konzentrationskammer bzw. -raum oder der/dem Filtratkammer bzw. -raum angeordnet. Eine der Öffnungen wird anschließend mit einer Membran bedeckt, wobei deren Zuflußseite zur Konzentrationskammer und deren Permeatseite zur Filtratkammer weist bzw. diesem gegenüberliegt. Die Kammern werden anschließend zusammengebaut, wobei die Öffnungen übereinander angeordnet werden, und ein druckbeständige(s) Gehäuse bzw. Muffe bzw. Hülse wird anschließend an der Außenseite und um die Kombination der Konzentrationskammer, der Dichtungseinrichtung, der Membran und der Filtratkammer angeordnet. Das Gehäuse schafft einen Druck, der ausreichend hoch ist, um die, Membran während des Prozesses flüssigkeitsdicht gegen mindestens eine der Kammern abzudichten und diesen Druck aufrechtzuerhalten, während auch die Festigkeit bzw. Steifigkeit bzw. Tragfähigkeit des Aufbaues der gesamten Anordnung erhöht wird.

### Bezugsziffernliste

- 1: Einsatz
- 2,2': Teil (des Gehäuses)
- 2'': einteiliges Gehäuse
- 3: Einlaß
- 4: Auslaß
- 5: Auslaß
- 5': Kanal für den Auslaß
- 6: unterer Teil (Fig. 5) / Bauteil (Fig. 9, 14, 15)
- 7: Dichtung
- 8: Sammelkanal
- 9: Kanal
- 10: Konzentrationskammer
- 11: Filtratkammer
- 12: oberer Teil
- 13: vertikaler Wandabschnitt
- 14: Auslaßkanal
- 15: Membran
- 16: Fläche
- 17: Schwalbenschwanzflansch/-kante
- 18: Flansch
- 19: Nut
- 20: Be-/Entlüftungskanal
- 21: Flansch
- 22: Flansch
- 23: Stabilisierungsring
- 24: Öffnungen
- 25: Vertiefungen einer Mikrotiterplatte
- 26: Mikrotiterplatte
- 27: Platte
- 28: Durchlässe
- 29: Wulste oder Stege
- 30: Manschetten
- 31: umlaufende Auflagefläche
- 32: Filtratauslaufstutzen

## Patentansprüche

1. Vorrichtung zum Konzentrieren und/oder Reinigen von Makromolekülen in einer Lösung mittels Filtration durch eine Membran (15), umfassend eine Konzentrationskammer (10) für eine zu verarbeitende Flüssigkeitsprobe, die mit einer ersten Öffnung versehen ist, eine Filtratkammer (11), die mit einer zweiten Öffnung versehen ist, die über der ersten Öffnung anzuordnen ist, eine Membran (15), die flüssigkeitsdicht entlang ihrem Umfang über einer der ersten und der zweiten Öffnung angeordnet ist und die beiden Kammern trennt, wobei eine elastische, ringförmig ausgebildete Dichtungseinrichtung (7) um mindestens eine der Öffnungen in Kontakt mit mindestens einer Seite der Membran (15) angeordnet ist, die Filtratkammer (11) auf der zu der Membran (15) weisenden bzw. dieser gegenüberliegenden Seite mit einer Membran bzw. Membranstutzeinrichtung versehen ist, welche die Filtratseite der Membran stützt, und wobei ein druckbeständiges Gehäuse (2, 2', 2") an der Außenseite und um die Kombination der Konzentrationskammer (10), der Dichtungseinrichtung (7), der Membran (15) und der Filtratkammer (11) angeordnet ist, so daß dadurch die Anordnung komplettiert wird und während des Prozesses Kompressionskräfte geschaffen und aufrechterhalten werden, die ausreichend hoch sind, die Membran (15) flüssigkeitsdicht gegen mindestens eine der Kammern (10, 11) abzudichten, während auch die Festigkeit bzw. Tragfähigkeit der Struktur der gesamten Anordnung erhöht ist.

2. Vorrichtung nach Anspruch 1, **dadurch gekennzeichnet, daß** die Dichtungseinrichtung (7) eine ringförmige elastische Einrichtung des O-Ring-Typs ist.

3. Vorrichtung nach Anspruch 1, **dadurch gekennzeichnet, daß** die Dichtungseinrichtung (7) die Form eines Grates aus elastischem Material hat und einen integralen Bestandteil mindestens einer der Kammern bildet.

4. , Vorrichtung nach einem der Ansprüche 1 bis 3, **dadurch gekennzeichnet, daß** das Gehäuse (2") ringförmig ist und eine zulaufende oder konische innere Oberfläche hat und daß mindestens eine der Kammern (10, 11) eine zulaufende oder konische äußere Oberfläche hat, welche beim Zusammenbau in Zusammenwirkung die Kompressionskräfte schafft.

5. Vorrichtung nach einem der Ansprüche 1 bis 4, **dadurch gekennzeichnet, daß** eine Vielzahl von Konzentrationskammern (10)zur gleichzeitigen Filtration einer Vielzahl von Flüssigkeitsproben vorhanden ist und der Einsatz (1) besteht aus dem als Stützplatte ausgebildeten Bauteil(6) mit einer Vielzahl von Öffnungen (24), aus der auf dem Bauteil (6) aufgelegten Dichtungseinrichtung (7) in Firm einer Dichtungsmatte mit zu den Öffnungen (24) des Bauteils (6) fluchtenden Durchlässen (28) und mit auf einer Seite der Dichtungsmatte, die dem Bauteil (6) abgewandt ist, befindlichen und die Durchlässe (28) der Dichtungsmatte umfassenden Manschetten (30) von einer größeren inneren Weite als die Weite der Durchlässe (28) derart, daß an der Basis im Inneren der Manschetten (30) eine umlaufende Auflagefläche (31) ausgebildet ist, aus einzelnen flächigen Membranen (15), die auf den umlaufenden Auflageflächen (31) der Manschetten (30) aufliegen,aus einer Platte (27) mit einer Vielzahl paralleler, an beiden Enden offenen Kammern (10) zur Aufnahme der Flüssigkeitsproben mit Außenumfangsflächen, die zu den Innenumfangsflächen der Manschetten (30) kongruent sind, wobei die Kammern (10) soweit in die Manschetten (30) eingeschoben sind, daß ihre unteren Enden an den Membranen(15) anliegen und wobei das zweiteilige Gehäuse (2, 2') auf der Oberseite mit einer Vielzahl der Einlasse (3) für die Flüssigkeitsproben und auf der Unterseite mit einer Vielzahl der Auslässe (5) für Filtrat versehen ist, welche zu den Öffnungen (24) des als Stützplatte ausgebildeten Bauteils (6) kongruent sind, und wobei die beiden Gehäuseteile (2, 2') über den Einsatz (1) geschoben sind derart, daß das Gehäuse (2") geschlossen ist, und dabei Kompressionskräfte geschaffen und aufrechterhalten sind, die ausreichend hoch sind, um die Membranen(15) flüssigkeitsdicht gegen die Auflagenflächen (31) der Manschetten (13) abzudichten und wobei im geschlossenen Gehäusezustand die Einlässe (3) der Oberseite des Gehäuses (2"), die Enden der Kammern (10), die Durchlässe (28) der Dichtungseinrichtung (7), die Öffnungen (24) des Bauteils (6) und die Auslässe (5) der Unterseite des Gehäuses (2") fluchtend auf einer Geraden liegen.

6. Vorrichtung nach Anspruch 5, **dadurch gekennzeichnet, daß** die Öffnungen (24) des Bauteils (6) mit Filtratauslaufstutzen (32) ausgestattet sind.

7. Verfahren zur Herstellung einer Vorrichtung zum Konzentrieren und/oder Reinigen von Makromolekülen in einer Lösung mittels Filtration durch eine Membran (15), wobei die Vorrichtung eine Konzentrationskammer (10) für eine zu verarbeitende Flüssigkeitsprobe, die mit einer ersten Öffnung versehen ist, eine Filtratkammer (11), die mit einer zweiten Öffnung versehen ist, eine entlang ihrem Umfang über einer der ersten und der zweiten Öffnung flüssigkeitsdicht angeordnete Membran (15), welche die beiden Kammern (10, 11) trennt, umfaßt, und daß es die folgenden Schritte umfaßt: eine elastische, ringförmig angeordnete Dichtungseinrichtung (7) wird um mindestens eine der Öffnungen angeordnet, eine der Öffnungen wird mit einer Membran (15) bedeckt, wobei deren Zuflußseite zur Konzentrationskammer (10) und deren Filtatseite zur Filtratkammer (11) weist; die Kammern (10, 11) werden zusammengebaut, wobei die erste Öffnung über der zweiten Öffnung angeordnet wird; und ein druckbeständiges Gehäuse (2, 2', 2") wird an der Außenseite und um die Kombination der Konzentrationskammer (10), der Dichtungseinrichtung (7), der Membran (15) und der Filtratkammer (11) angeordnet, so daß dadurch die Anordnung vervollständigt wird und während des Prozesses Druckkräfte geschaffen und aufrechterhalten werden, die ausreichend hoch sind, die Membran (15) flüssigkeitsdicht gegen mindestens eine der Kammern (10, 11) abzudichten, während auch die strukturelle Abstützung der gesamten Anordnung erhöht wird.

## Claims

1. Device for the concentration and/or purification of macromolecules in a solution by means of filtration through a membrane (15), comprising a concentration chamber (10) for a liquid sample to be processed, which is provided with a first orifice, a filtrate chamber (11) which is provided with a second orifice to be arranged above the first orifice, and a membrane (15) which is arranged in a liquid-tight manner along its circumference above one of the first and of the second orifice and separates the two chambers, an elastic annularly designed sealing device (7) being arranged around at least one of the orifices and in contact with at least one side of the membrane (15), the filtrate chamber (11) being provided, on the side pointing towards the membrane (15) or located opposite the latter, with a membrane or membrane-supporting device which supports the filtrate side of the membrane, and a pressure-resistant housing (2, 2', 2'') being arranged on the outside and around the combination of the concentration chamber (10), of the sealing device (7) of the membrane (15) and of the filtrate chamber (11), so that the arrangement is thereby completed and, during the process, compressive forces are generated and maintained which are sufficiently high to seal off the membrane (15) in a liquid-tight manner relative to at least one of the chambers (10, 11), whilst the strength or load-bearing capacity of the structure of the entire arrangement is also increased.

2. Device according to Claim 1, **characterized in that** the sealing device (7) is an annular elastic device of the O-ring type.

3. Device according to Claim 1, **characterized in that** the sealing device (7) is in the form of a fin of elastic material and forms an integral part of at least one of the chambers.

4. Device according to one of Claims 1 to 3, **characterized in that** the housing (2'') is annular and has a tapering or conical inner surface, and **in that** at least one of the chambers (10, 11) has a tapering or conical outer surface which in interaction generates the compressive forces during assembly.

5. Device according to one of Claims 1 to 4, **characterized in that** there is a plurality of concentration chambers (10) for the simultaneous filtration of a plurality of liquid samples, and the insert (1) consists of the component (6) designed as a support plate and having a plurality of orifices (24), of the sealing device (7) laid on the component (6) and taking the form of a sealing mat with passages (28) aligned relative to the orifices (24) of the component (6) and with sleeves (30) which are located on a side of the sealing mat which faces away from the component (6) and surround the passages (28) of the sealing mat and which are of a greater inner width than the width of the passages (28), in such a way that a peripheral bearing surface (31) is formed at the base inside the sleeves (30), of individual sheet-like membranes (15) which lie on the peripheral bearing surfaces (31) of the sleeves (30), and of a plate (27) with a plurality of parallel chambers (10), open at both ends, for receiving the liquid samples, with outer circumferential surfaces which are congruent to the inner circumferential surfaces of the sleeves (30), the chambers (10) being pushed into the sleeves (30) to an extent such that their lower ends come to bear on the membranes (15), and the two-part housing (2, 2') being provided on the top side with a plurality of inlets (3) for the liquid samples and on the underside with a plurality of outlets (5) for filtrate, which are congruent to the orifices (24) of the component (6) designed as a support plate, and the two housing parts (2, 2') being pushed over the insert (1) in such a way that the housing (2'') is closed and at the same time compressive forces are generated and maintained which are sufficiently high to seal off the membranes (15) in a liquid-tight manner relative to the bearing surfaces (31) of the sleeves (30), and, with the housing in the closed state, the inlets (3) of the top side of the housing (2''), the ends of the chambers (10), the passages (28) of the sealing device (7), the orifices (24) of the component (6) and the outlets (5) of the underside of the housing (2'') lying in alignment on a straight line.

6. Device according to Claim 5, **characterized in that** the orifices (24) of the component (6) are equipped with filtrate outflow nipples (32).

7. Method for the production of a device for the concentration and/or purification of macromolecules in a solution by means of filtration through a membrane (15), the device comprising a concentration chamber (10) for a liquid sample to be processed, which is provided with a first orifice, a filtrate chamber (11) which is provided with a second orifice, and a membrane (15) which is arranged in a liquid-tight manner along its circumference above one of the first and of the second orifice and separates the two chambers (10, 11), the said method comprising the following steps: an elastic annularly arranged sealing device (7) is arranged around at least one of the orifices, one of the orifices is covered with a membrane (15), its inflow side pointing towards the concentration chamber (10) and its filtrate side pointing towards the filtrate chamber (11); the chambers (10, 11) are assembled, the first orifice being arranged above the second orifice; and a pressure-resistant housing (2, 2', 2'') is arranged on the outside and around the combination of the concentration chamber (10), of the sealing device (7), of the membrane (15) and of the filtrate chamber (11), so that the arrangement is thereby completed and, during the process, pressure forces are generated and maintained which are sufficiently high to seal off the membrane (15) in a liquid-tight manner relative to at least one of the chambers (10, 11), whilst the structural support of the entire arrangement is also increased.

## Revendications

1. Dispositif de concentration et/ou de purification de macromolécules présentes dans une solution, au moyen d'une filtration à travers une membrane (15), le dispositif comprenant une chambre de concentration (10) pour un échantillon de liquide à traiter et pourvue d'une première ouverture, une chambre de filtration (11) qui est pourvue d'une deuxième ouverture à disposer au-dessus de la première ouverture, une membrane (15), qui est disposée d'une manière étanche aux liquides le long de sa périphérie, au-dessus de l'une de la première et de la deuxième ouverture et qui sépare les deux chambres, tandis qu'un dispositif d'étanchéité (7) élastique et réalisé en forme d'anneau est disposé autour d'au moins l'une des ouvertures, en contact avec au moins un côté de la membrane (15), la chambre de filtration (11) étant pourvue, sur le côté dirigé vers la membrane (15) ou bien opposé à celle-ci, d'une membrane ou bien d'un dispositif de soutien de membrane, qui soutient le côté filtrat de la membrane, et dans lequel un boîtier (2, 2', 2'') résistant à la pression est disposé au niveau du côté extérieur et autour de la combinaison constituée par la chambre de concentration (10), le dispositif d'étanchéité (7), la membrane (15) et la chambre de filtration (11), pour ainsi compléter l'agencement et créer ainsi que maintenir, pendant le processus, des forces de compression qui sont suffisamment élevées pour rendre étanche la membrane (15) contre au moins l'une des chambres (10, 11) d'une manière étanche aux liquides, tandis que la résistance ou bien la charge admissible de la structure de l'ensemble de l'agencement est améliorée.

2. Dispositif selon la revendication 1, **caractérisé en ce que** le dispositif d'étanchéité (7) est un dispositif élastique en forme d'anneau du type joint torique.

3. Dispositif selon la revendication 1, **caractérisé en ce que** le dispositif d'étanchéité (7) présente la forme d'une arête en une matière élastique et constitue un élément d'un seul tenant avec au moins l'une des chambres.

4. Dispositif selon l'une des revendications 1 à 3, **caractérisé en ce que** le boîtier (2") est annulaire et présente une surface intérieure à effilement progressif ou conique, et **en ce qu'**au moins l'une des chambres (10, 11) a une surface extérieure à effilement progressif ou conique, ce qui produit, lors de l'assemblage et en coopération, les forces de compression.

5. Dispositif selon l'une des revendications 1 à 4, **caractérisé en ce qu**'il est prévu une pluralité de chambres de concentration (10) pour la filtration simultanée d'une pluralité d'échantillons de liquide, et en ce que l'élément inséré (1) se compose de l'élément (6) réalisé en tant que plaque de support et présentant une pluralité d'ouvertures (24), du dispositif d'étanchéité (7) placé sur l'élément (6) et ayant la forme d'une nappe d'étanchéité avec des passages (28) en alignement avec les ouvertures (24) de l'élément (6), et avec des manchettes (30) qui se trouvent sur un côté de la nappe d'étanchéité, dirigé à l'opposé de l'élément (6), et qui entourent les passages (28) de la nappe d'étanchéité, ces manchettes ayant un plus grand diamètre intérieur que le diamètre des passages (28) de telle sorte que soit formée, au niveau de la base, à l'intérieur des manchettes (30) une surface périphérique d'appui (31), de membranes plates (15) individuelles, qui reposent sur les surfaces périphériques d'appui (31) des manchettes (30), d'une plaque (27) comportant une pluralité de chambres (10) parallèles et ouvertes aux deux extrémités, destinées à recevoir les échantillons de liquide et présentant des surfaces périphériques extérieures qui sont conformes aux surfaces périphériques intérieures des manchettes (30), les chambres (10) étant introduites à l'intérieur des manchettes (30) suffisamment loin pour que leurs extrémités inférieures reposent contre les membranes (15), et dans lequel le boîtier en deux parties (2, 2') est pourvu, sur son côté supérieur, d'une pluralité d'orifices d'admission (3) pour les échantillons de liquide et, sur son côté inférieur, d'une pluralité d'orifices d'évacuation (5) pour le filtrat, lesquels orifices sont conformes aux ouvertures (24) de l'élément (6) réalisé en tant que plaque de support, et dans lequel les deux parties de boîtier (2, 2') sont glissées sur l'élément inséré (1) de telle manière que le boîtier (2'') soit fermé et que des forces de compression soient ainsi créées et maintenues, qui sont suffisamment élevées pour rendre étanches les membranes (15) contre les surfaces d'appui (31) des manchettes (13) d'une manière étanche aux liquides, et dans lequel, à l'état fermé du boîtier, les orifices d'admission (3) du côté supérieur du boîtier (2''), les extrémités des chambres (10), les passages (28) présents dans le dispositif d'étanchéité (7), les ouvertures (24) situées dans l'élément (6) et les orifices d'évacuation (5) du côté inférieur du boîtier (2'') sont en alignement sur une ligne droite.

6. Dispositif selon la revendication 5, **caractérisé en ce que** les ouvertures (24) situées dans l'élément (6) sont munies de tubulures de sortie de filtrat (32).

7. Procédé de fabrication d'un dispositif de concentration et/ou de purification de macromolécules présentes dans une solution, au moyen d'une filtration à travers une membrane (15), dans lequel le dispositif comprend une chambre de concentration (10) pour un échantillon de liquide à traiter et pourvue d'une première ouverture, une chambre de filtration (11) qui est pourvue d'une deuxième ouverture, une membrane (15), qui est disposée, d'une manière étanche aux liquides le long de sa périphérie, au-dessus de l'une de la première et de la deuxième ouverture et qui sépare les deux chambres (10, 11), ledit procédé comprenant les étapes de mise en place d'un dispositif d'étanchéité (7) élastique et en forme d'anneau autour d'au moins l'une des ouvertures, de recouvrement de l'une des ouvertures par une membrane (15), dont le côté d'arrivée de liquide est dirigé vers la chambre de concentration (10) et dont le côté filtrat est dirigé vers la chambre de filtration (11) ; d'assemblage des chambres (10, 11), la première ouverture étant disposée au-dessus de la deuxième ouverture ; et de mise en place d'un boîtier (2, 2', 2'') résistant à la pression, au niveau du côté extérieur et autour de la combinaison constituée par la chambre de concentration (10), le dispositif d'étanchéité (7), la membrane (15) et la chambre de filtration (11), si bien que l'agencement est ainsi complété et que, pendant le processus, des forces de pression sont créées et maintenues, qui sont suffisamment élevées pour rendre étanche la membrane (15) contre au moins l'une des chambres (10, 11) d'une manière étanche aux liquides, tandis que le support de la structure de l'ensemble de l'agencement est amélioré.
